# EUROPÄISCHE PATENTSCHRIFT

(11) **EP 3 207 227 B1**
(45) Veröffentlichungstag und Bekanntmachung des Hinweises auf die Patenterteilung: **30.06.2021**
(21) Anmeldenummer: 15778672.4
(22) Anmeldetag: 12.10.2015
(51) Int. Cl.: F01M 13/04, F16K 24/04

(54) **DRAINAGEVORRICHTUNG**
DRAINAGE DEVICE
DISPOSITIF DE VIDANGE

(30) Priorität: 14.10.2014 DE 102014220811
(43) Veröffentlichungstag der Anmeldung: 23.08.2017
(73) Patentinhaber: ElringKlinger AG, 72581 Dettingen (DE)
(72) Erfinder: COOLENS, Holger, 72070 Tübingen (DE); AMANN, Erich, 72108 Rottenburg (DE); STIFEL, Torsten, 72401 Haigerloch (DE)
(74) Vertreter: Hoeger, Stellrecht & Partner Patentanwälte mbB
(86) Internationale Anmeldenummer: PCT/EP2015/073556
(87) Internationale Veröffentlichungsnummer: WO 2016/058986

(56) Entgegenhaltungen:
- EP-A1- 1 394 372
- EP-A1- 2 460 984
- DE-A1-102006 018 783
- DE-U1- 29 913 728
- DE-U1-202005 016 906
- US-A- 785 594
- US-A1- 2002 195 141

## Beschreibung

Die vorliegende Erfindung betrifft eine Drainagevorrichtung, beispielsweise eine Öldrainagevorrichtung, welche insbesondere zur Kurbelgehäuseentlüftung in Kraftfahrzeugmotoren zur Anwendung kommt.

Es kann vorgesehen sein, dass mittels Ölnebelabscheidern in einer Kurbelgehäuseentlüftung von Verbrennungsmotoren abgeschiedenes Öl über einen Kanal in einen Ölsumpf zurückgeführt wird. Hierdurch ist eine direkte Verbindung zwischen Ölsumpf und einer Reingasseite des Ölabscheiders hergestellt, woraus bei erhöhtem Druckverlust durch den Ölabscheider, beispielsweise durch Vereisung, die Gefahr resultieren kann, dass Öl aus der Ölwanne in den Ölabscheider und schließlich in den Ansaugtrakt des Verbrennungsmotors gelangt. Dies kann unter Umständen einen kapitalen Motorschaden zur Folge haben. Mittels eines Rückschlagventils in einer Rückführleitung der Kurbelgehäuseentlüftung kann dieser Problematik möglicherweise entgegengewirkt werden.

Ein Rückschlagventil kann beispielsweise druckgesteuert sein. Das Schließen bzw. das Öffnen des Rückschlagventils ergibt sich dann durch eine anliegende Druckdifferenz.

Die DE 10 2010 062 321 A1 (entspricht der EP 2 460 984 A1) und die WO 2011/141258 A1 offenbaren unterschiedliche Ausführungsformen von Ölabscheidern.

Die EP 1 394 372 A1 offenbart eine in eine Ventilhaube integrierte Ventilvorrichtung.

Die DE 10 2006 018 783 A1 offenbart ein Ventil für ein Kurbelgehäuseentlüftungssystem.

Die DE 20 2005 016 906 U1 offenbart ein Elektronikgehäuse mit einem Ventileinsatz, wobei ein Schwimmkörper von unten anströmbar in einer Führungshülse beweglich gehalten ist.

Der vorliegenden Erfindung liegt die Aufgabe zugrunde, eine Drainagevorrichtung bereitzustellen, welche zuverlässig einen unerwünschten Flüssigkeitsrückfluss verhindert sowie einfach und kostengünstig herstellbar ist.

Diese Aufgabe wird erfindungsgemäß durch eine Drainagevorrichtung gemäß Anspruch 1 gelöst.

Dadurch, dass die erfindungsgemäße Drainagevorrichtung einen Schwimmkörper umfasst, kann das Drainageventil vorzugsweise unabhängig von einer Druckdifferenz und/oder einer Gasströmung in einer Fluidleitung der Drainagevorrichtung betrieben werden. Insbesondere eine zuverlässige Drainage kann hierdurch über einen breiten Betriebsbereich gewährleistet werden. Z Erfindungsgemäss umfasst die Drainagevorrichtung einen Schwimmkörper der einen Auftriebskörper umfasst. Vorzugsweise weist der Auftriebskörper des Schwimmkörpers und/oder der gesamte Schwimmkörper eine Massendichte auf, welche geringer ist als die Massendichte des mittels der Drainagevorrichtung abzuführenden Fluids, beispielsweise von Motoröl.

Günstig kann es sein, wenn ein Auftriebskörper des Schwimmkörpers in der Offenstellung seitlich versetzt zu einem Strömungsweg eines durch die Drainagevorrichtung strömenden Gasstroms angeordnet ist.

Insbesondere kann vorgesehen sein, dass ein Auftriebskörper des Schwimmkörpers in der Offenstellung derart relativ zu dem Fluiddurchlass und/oder relativ zu dem Strömungsweg positioniert ist, dass der Auftriebskörper des Schwimmkörpers im Wesentlichen unabhängig von einer Gasströmung durch die Drainagevorrichtung in der Offenstellung verbleibt.

Alternativ oder ergänzend hierzu kann vorgesehen sein, dass ein Auftriebskörper des Schwimmkörpers in der Offenstellung derart relativ zu dem Fluiddurchlass und/oder relativ zu dem Strömungsweg positioniert ist, dass der Auftriebskörper des Schwimmkörpers im Wesentlichen unabhängig von einem Druckunterschied zwischen einer Einlassöffnung der Drainagevorrichtung und einer Auslassöffnung der Drainagevorrichtung in der Offenstellung verbleibt.

Der Schwimmkörper als Ganzes und/oder der Auftriebskörper des Schwimmkörpers sind vorzugsweise so ausgebildet und/oder angeordnet, dass eine Gasströmung durch die Drainagevorrichtung strömen kann, ohne den Schwimmkörper mitzureißen.

Erfindungsgemäß ist vorgesehen, dass die Drainagevorrichtung eine Schwimmkörperaufnahme zur bewegbaren Aufnahme des Schwimmkörpers umfasst.

Der Fluiddurchlass ist vorzugsweise an einem bezüglich der Schwerkraftrichtung oberen Bereich der Schwimmkörperaufnahme angeordnet. Durch eine Aufwärtsbewegung des Schwimmkörpers in Richtung des Fluiddurchlasses und durch ein abdichtendes Anlegen des Schwimmkörpers an dem Fluiddurchlass kann dieser vorzugsweise verschlossen werden. Der Schwimmkörper ist dann in der Schließstellung angeordnet.

Die Drainagevorrichtung umfasst vorzugsweise eine Auslassöffnung, durch welche ein Gasstrom und/oder eine abzuführende Flüssigkeit hindurchführbar ist.

Eine Auslassöffnung der Drainagevorrichtung ist in einer Seitenwandung der Schwimmkörperaufnahme angeordnet.

Eine Auslassöffnung der Drainagevorrichtung erstreckt sich in der Offenstellung des Schwimmkörpers zumindest abschnittsweise oberhalb des Auftriebskörpers des Schwimmkörpers, so dass ein Gasstrom seitlich und/oder oberhalb des Auftriebskörpers des Schwimmkörpers an dem Auftriebskörper des Schwimmkörpers vorbeiströmen kann.

Der Schwimmkörper, insbesondere der Auftriebskörper des Schwimmkörpers, ist mittels des Gasstroms dann vorzugsweise nicht entgegen der Schwerkraftrichtung von unten anströmbar, so dass sich insbesondere keine Auftriebskraft durch die Gasströmung ergibt.

Erfindungsgemäß ist vorgesehen, dass der Auftriebskörper des Schwimmkörpers im Wesentlichen glockenförmig oder topfförmig ausgebildet ist.

Unter einer glockenförmigen oder topfförmigen Ausgestaltung ist insbesondere zu verstehen, dass der Auftriebskörper ein Bauteil umfasst, welches einen Innenraum des Auftriebskörpers fünfseitig umgibt und welches lediglich einseitig geöffnet ist.

Der Innenraum des Auftriebskörpers kann durch eine einseitige Öffnung in dem Bauteil zugänglich sein. Vorzugsweise ist die Öffnung mittels eines weiteren Bauteils des Auftriebskörpers verschlossen oder verschließbar.

Günstig kann es sein, wenn der Auftriebskörper ein Bauteil umfasst, welches einen Innenraum fünfseitig umgibt und eine Öffnung aufweist, durch die der Innenraum lediglich einseitig zugänglich ist. Ein die Öffnung umgebender Rand des Bauteils ist vorzugsweise eine, insbesondere linienförmige, Dichtkante, an welcher ein weiteres Bauteil des Auftriebskörpers zum Verschließen der Öffnung anordenbar ist.

Günstig kann es sein, wenn der Auftriebskörper ein Bauteil umfasst, welches eine Dichtfläche, beispielsweise eine ebene, gewellte oder gekrümmte Dichtfläche, aufweist, mit der das Bauteil an ein den Innenraum umgebendes und eine Öffnung aufweisendes Bauteil anlegbar, insbesondere anschweißbar, ist.

Vorteilhaft kann es insbesondere sein, wenn eine Dichtkante eines Bauteils des Auftriebskörpers, insbesondere eines einen Innenraum fünfseitig umgebenden und eine Öffnung aufweisenden Bauteils des Auftriebskörpers, an eine Dichtfläche eines weiteren Bauteils des Auftriebskörpers anlegbar, insbesondere anschweißbar, ist. Hierdurch kann der Auftriebskörper vorzugsweise einfach und kostengünstig hergestellt werden.

Der Auftriebskörper des Schwimmkörpers ist vorzugsweise als ein Kunststoffbauteil, insbesondere als ein Spritzguss-Kunststoffbauteil, ausgebildet. Vorzugsweise ist der Schwimmkörper als Ganzes als ein Kunststoffbauteil, insbesondere als ein Spritzguss-Kunststoffbauteil, ausgebildet.

Es kann vorgesehen sein, dass der Auftriebskörper des Schwimmkörpers einstückig ausgebildet ist.

Ferner kann vorgesehen sein, dass der Schwimmkörper als Ganzes einstückig ausgebildet ist.

Alternativ hierzu kann jedoch auch vorgesehen sein, dass der Auftriebskörper und/oder der Schwimmkörper zweiteilig oder mehr als zweiteilig ausgebildet sind.

Beispielsweise kann vorgesehen sein, dass ein Auftriebskörper des Schwimmkörpers zweiteilig oder mehr als zweiteilig ausgebildet ist, wobei ein als Glockenelement oder Topfelement ausgebildetes Bauteil vorgesehen ist, welches einen seitlich und in Schwerkraftrichtung nach oben hin abgedichteten Innenraum des Auftriebskörpers umgibt. Ferner ist vorzugsweise ein als Deckelelement oder Bodenelement ausgebildetes Bauteil vorgesehen, mittels welchem der Innenraum in Schwerkraftrichtung nach unten hin verschlossen, insbesondere abgedichtet, ist.

Das Deckelelement und/oder das Bodenelement ist vorzugsweise als ein ebenes und/oder flaches Element ausgebildet. Beispielsweise kann vorgesehen sein, dass das als Bodenelement oder Deckelelement ausgebildete Bauteil an das Bauteil angeschweißt ist, welches beispielsweise als Glockenelement oder Topfelemente ausgebildet ist.

Ein Innenraum des Auftriebskörpers ist vorzugsweise ein leerer, luftgefüllter oder gasgefüllter Hohlraum.

Es kann jedoch auch vorgesehen sein, dass der Innenraum des Auftriebskörpers teilweise oder vollständig mit einem Gas, einer Flüssigkeit oder einem Feststoff gefüllt ist, wobei diese Füllung vorzugsweise eine geringere Massendichte aufweist als die mittels der Drainagevorrichtung abzuführende Flüssigkeit.

Vorteilhaft kann es sein, wenn die Drainagevorrichtung eine Ausrichtungsvorrichtung umfasst, mittels welcher der Schwimmkörper relativ zu einer Schwimmkörperaufnahme der Drainagevorrichtung in eine vorgegebene Position und/oder Drehausrichtung bringbar oder in einer vorgegebenen Position und/oder Drehausrichtung haltbar ist.

Mittels der Ausrichtungsvorrichtung ist der Schwimmkörper vorzugsweise von der Schließstellung in die Offenstellung und/oder von der Offenstellung in die Schließstellung führbar, insbesondere ohne eine Drehausrichtung des Schwimmkörpers innerhalb einer Schwimmkörperaufnahme der Drainagevorrichtung zu verändern.

Mittels der Ausrichtungsvorrichtung ist vorzugsweise eine Drehausrichtung des Schwimmkörpers bezüglich einer im Wesentlichen parallel zur Schwerkraftrichtung verlaufenden Achse und/oder bezüglich einer oder zweier im Wesentlichen senkrecht zur Schwerkraftrichtung und/oder senkrecht zueinander verlaufender Achsen festlegbar.

Es kann vorgesehen sein, dass die Ausrichtungsvorrichtung ein oder mehrere Ausrichtungselemente umfasst, welche vorzugsweise an einem Auftriebskörper des Schwimmkörpers angeordnet sind und/oder welche vorzugsweise von dem Auftriebskörper des Schwimmkörpers weg ragen.

Insbesondere kann vorgesehen sein, dass ein oder mehrere Ausrichtungselemente der Ausrichtungsvorrichtung seitlich oder im Wesentlichen vertikal nach oben oder nach unten von dem Auftriebskörper weg ragen.

Günstig kann es sein, wenn ein oder mehrere Ausrichtungselemente als Führungsvorsprünge ausgebildet sind, welche insbesondere mit einer oder mehreren Ausnehmungen oder Vertiefungen in einer Seitenwandung der Schwimmkörperaufnahme in Eingriff bringbar sind.

Beispielsweise kann vorgesehen sein, dass der Schwimmkörper ein oder mehrere als seitliche Führungsvorsprünge ausgebildete Ausrichtungselemente umfasst, welche mit einer oder mehreren Ausnehmungen oder Vertiefungen in einer Seitenwandung der Schwimmkörperaufnahme in Eingriff bringbar sind.

Es kann vorgesehen sein, dass eine oder mehrere Ausnehmungen in der Seitenwandung der Schwimmkörperaufnahme zur Aufnahme und Führung des einen oder der mehreren Führungsvorsprünge vorgesehen sind. Die eine oder die mehreren Ausnehmungen bilden vorzugsweise eine oder mehrere Auslassöffnungen der Drainagevorrichtung.

Bei einer Ausgestaltung der Erfindung kann vorgesehen sein, dass ein oder mehrere Ausrichtungselemente als im Wesentlichen vertikale Vorsprünge ausgebildet sind, welche zumindest näherungsweise entgegen der Schwerkraftrichtung nach oben von dem Auftriebskörper des Schwimmkörpers hervorragen.

Ein oder mehrere Ausrichtungselemente sind vorzugsweise als vertikale Vorsprünge ausgebildet, welche sich in der Schließstellung des Schwimmkörpers und/oder in der Offenstellung des Schwimmkörpers durch den Fluiddurchlass der Drainagevorrichtung hindurcherstrecken.

Mittels des Fluiddurchlasses und/oder der Fluidleitung ist hierdurch vorzugsweise eine Drehausrichtung des Schwimmkörpers festlegbar. Der Fluiddurchlass und/oder die Fluidleitung bilden dabei vorzugsweise einen Anschlag für das eine oder die mehreren Ausrichtungselemente.

Vorteilhaft kann es sein, wenn ein oder mehrere Ausrichtungselemente im Wesentlichen stabförmig oder schwertförmig ausgebildet sind.

Unter einer stabförmigen oder schwertförmigen Ausbildung ist dabei insbesondere eine lange dünne und/oder schmale Ausbildung eines Ausrichtungselements zu verstehen. Eine Länge und/oder Höhe eines Ausrichtungselements beträgt dabei vorzugsweise mindestens das Fünffache einer Breite des Ausrichtungselements.

Eine Dicke des Ausrichtungselements beträgt dabei vorzugsweise höchstens ungefähr die Hälfte einer Breite des Ausrichtungselements.

Ein oder mehrere Ausrichtungselemente weisen vorzugsweise einen sternförmigen oder kreuzförmigen horizontalen Querschnitt auf. Hierdurch kann vorzugsweise ein freies Umströmen des einen oder der mehreren Ausrichtungselemente gewährleistet werden.

Günstig kann es sein, wenn die Drainagevorrichtung einen Grundkörper umfasst, welcher die Fluidleitung, eine Schwimmkörperaufnahme, eine Dichtelementaufnahme, einen Einschubabschnitt und/oder einen Befestigungsabschnitt, beispielsweise einen Schweißabschnitt zum Anschweißen der Drainagevorrichtung an eine Ölabscheidevorrichtung, umfasst.

Eine Dichtelementaufnahme dient vorzugsweise zur Aufnahme eines Dichtelements, insbesondere eines Dichtrings, beispielsweise eines O-Rings. Das Dichtelement dient insbesondere zur radial äußeren Abdichtung der Drainagevorrichtung.

Der Grundkörper ist vorzugsweise im Wesentlichen zylinderförmig ausgebildet. Die Begriffe "radial", "axial", "Umlaufrichtung", etc. beziehen sich dann insbesondere auf eine Zentralachse oder Symmetrieachse des Grundkörpers.

Vorteilhaft kann es sein, wenn der Grundkörper als ein Kunststoffbauteil, insbesondere als ein Spritzguss-Kunststoffbauteil, ausgebildet ist.

Der Grundkörper ist vorzugsweise einstückig ausgebildet. Hierdurch kann eine besonders einfach herzustellende und zuverlässig zu betreibende Drainagevorrichtung kostengünstig hergestellt werden.

Die Drainagevorrichtung ist vorzugsweise eine Öldrainagevorrichtung, insbesondere für einen Verbrennungsmotor eines Fahrzeugs, beispielsweise eines Kraftfahrzeugs.

Vorzugsweise ist das Drainageventil der Drainagevorrichtung ausschließlich durch einen ansteigenden Flüssigkeitspegel und/oder durch Schwerkraft betätigbar.

Das Drainageventil der Drainagevorrichtung ist vorzugsweise ausschließlich durch Aufschwimmen des Schwimmkörpers verschließbar, wobei der Schwimmkörper vorzugsweise eine geringere Massendichte aufweist als eine mittels der Drainagevorrichtung abzuführende Flüssigkeit (archimedisches Prinzip).

Der Schwimmkörper ist vorzugsweise verrastend in der Schwimmkörperaufnahme festlegbar. Die Verrastung erfolgt dabei vorzugsweise mittels eines seitlichen Vorsprungs des Schwimmkörpers und einem Langloch in einer Seitenwandung der Schwimmkörperaufnahme. Der Schwimmkörper ist dann vorzugsweise auch in dem verrastenden Zustand relativ zu der Schwimmkörperaufnahme bewegbar, insbesondere um von der Offenstellung in die Schließstellung und/oder von der Schließstellung in die Offenstellung gebracht zu werden.

Eine Schwimmkörperaufnahme der Drainagevorrichtung ist vorzugsweise als ein Schwimmkörperkäfig ausgebildet.

Die Fluidleitung der Drainagevorrichtung dient vorzugsweise einerseits der Hindurchführung eines Gasstroms und andererseits der Abführung einer mittels der Drainagevorrichtung abzuführenden Flüssigkeit. Die Fluidleitung ist somit vorzugsweise auch ein Drainagekanal.

Ferner kann die erfindungsgemäße Drainagevorrichtung einzelne oder mehrere der nachfolgend beschriebenen Merkmale und/oder Vorteile aufweisen:
Der Schwimmkörper weist vorzugsweise eine geringere Massendichte auf als Öl, insbesondere eine geringere Dichte als 0,85 g/cm³.

Beispielsweise kann ein Auftriebskörper des Schwimmkörpers als eine hohle Kunststoffkugel oder allgemein als ein hohler Kunststoffkörper mit einem Durchmesser zwischen ungefähr 5 mm und ungefähr 10 mm ausgebildet sein.

In einem Innenraum des Auftriebskörpers ist vorzugsweise eine Luftblase oder eine Gasblase eingeschlossen.

In der Offenstellung des Schwimmkörpers ist vorzugsweise ein Spalt zwischen dem Schwimmkörper und dem Fluiddurchlass von mindestens ungefähr 3 mm, beispielsweise mindestens ungefähr 5 mm, und/oder höchstens ungefähr 10 mm, beispielsweise höchstens ungefähr 8 mm, gebildet.

Der Fluiddurchlass und/oder der Schwimmkörper weisen vorzugsweise eine konische Form und/oder eine hohe Oberflächengüte auf, insbesondere um eine zuverlässige Abdichtung des Fluiddurchlasses zu erzielen.

Alternativ oder ergänzend hierzu kann vorgesehen sein, dass das Drainageventil eine Dichtlippe, beispielsweise eine Gummidichtlippe, umfasst, mittels welcher eine Abdichtung des Fluiddurchlasses erzielt werden kann.

Die Schwimmkörperaufnahme verhindert vorzugsweise ein Verkanten oder Verkippen des Schwimmkörpers und/oder dient als Verliersicherung für den Schwimmkörper.

Vorteilhaft kann es sein, wenn die Drainagevorrichtung als vormontierte Einheit ausgebildet ist, welche insbesondere in eine Ölabscheidevorrichtung integriert werden kann. Ein Montageaufwand für den Hersteller eines Verbrennungsmotors kann hierdurch vorzugsweise reduziert werden. Eine Ausrichtungsvorrichtung kann beispielsweise als Führungsrippen ausgebildete Ausrichtungselemente umfassen. Hierdurch kann vorzugsweise ein Verkanten des Schwimmkörpers verhindert und eine im Wesentlichen lineare Bewegung des Schwimmkörpers relativ zu der Schwimmkörperaufnahme gewährleistet werden.

Mittels eines oder mehrerer Ausrichtungselemente einer Ausrichtungsvorrichtung der Drainagevorrichtung kann vorzugsweise ein unerwünschtes Verlieren oder Beschädigen des Schwimmkörpers beim Transport oder während des Betriebs desselben wirksam verhindert werden.

Ein Dichtelement zum Abdichten eines Grundkörpers der Drainagevorrichtung nach außen und/oder ein Dichtelement zum Abdichten zwischen dem Fluiddurchlass und dem Schwimmkörper kann vorzugsweise als eine angespritzte Dichtlippe ausgebildet sein.

Die Drainagevorrichtung kann beispielsweise als vormontierte Einheit ausgebildet sein, welche insbesondere durch Anschweißen an eine Ölabscheidevorrichtung fertigstellbar ist.

Weitere bevorzugte Merkmale und/oder Vorteile der Erfindung sind Gegenstand der nachfolgenden Beschreibung und der zeichnerischen Darstellung eines Ausführungsbeispiels.

In den Zeichnungen zeigen:
- Fig. 1: eine schematische perspektivische Darstellung einer Ölabscheidevorrichtung, welche eine Drainagevorrichtung zum Abführen von abgeschiedenem Öl umfasst;
- Fig. 2: eine schematische Seitenansicht der Ölabscheidevorrichtung aus Fig. 1;
- Fig. 3: eine schematische perspektivische Darstellung der Drainagevorrichtung aus Fig. 1;
- Fig. 4: eine weitere schematische perspektivische Darstellung der Drainagevorrichtung aus Fig. 1;
- Fig. 5: eine schematische Seitenansicht der Drainagevorrichtung aus Fig. 1;
- Fig. 6: einen schematischen vertikalen Schnitt durch die Drainagevorrichtung aus Fig. 1;
- Fig. 7: eine vergrößerte Darstellung eines Schwimmkörpers der Drainagevorrichtung aus Fig. 1;
- Fig. 8: eine schematische Seitenansicht eines Bauteils, in welches eine Drainagevorrichtung aus Fig. 1 eingebaut ist;
- Fig. 9: einen schematischen vertikalen Schnitt durch das Bauteil und die Drainagevorrichtung aus Fig. 8 längs der Linie 9-9 in Fig. 8;
- Fig. 10: eine alternative Seitenansicht des Bauteils und der Drainagevorrichtung gemäß Fig. 8;
- Fig. 11: einen schematischen vertikalen Schnitt durch das Bauteil und die Drainagevorrichtung aus Fig. 10 längs der Linie 11-11 in Fig. 10; und
- Fig. 12: eine vergrößerte Darstellung des Bereichs XII in Fig. 11.

Gleiche oder funktional äquivalente Elemente sind in sämtlichen Figuren mit denselben Bezugszeichen versehen.

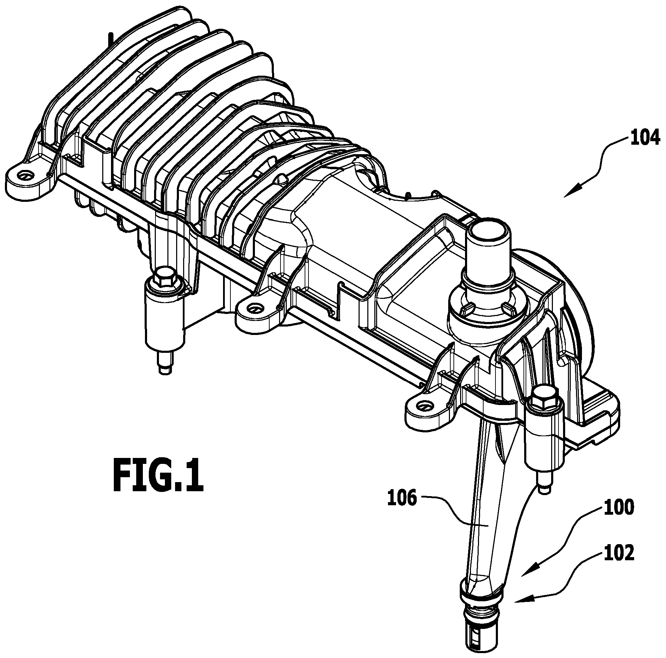

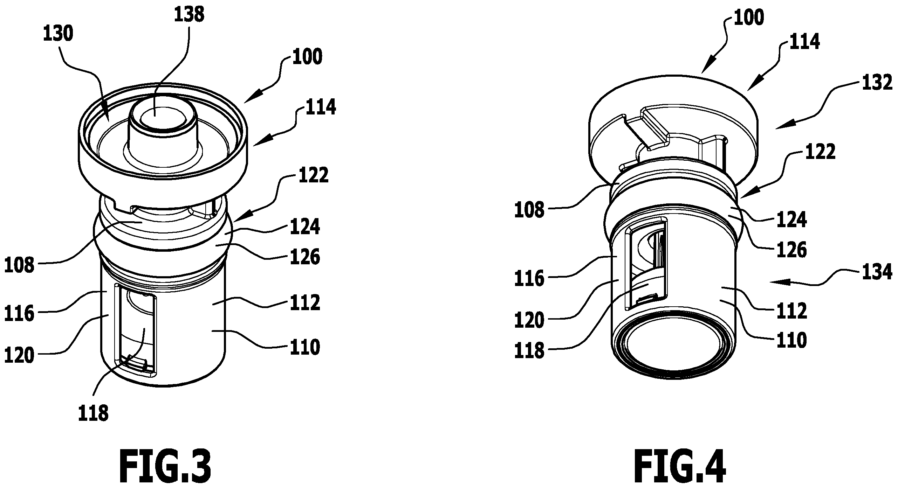

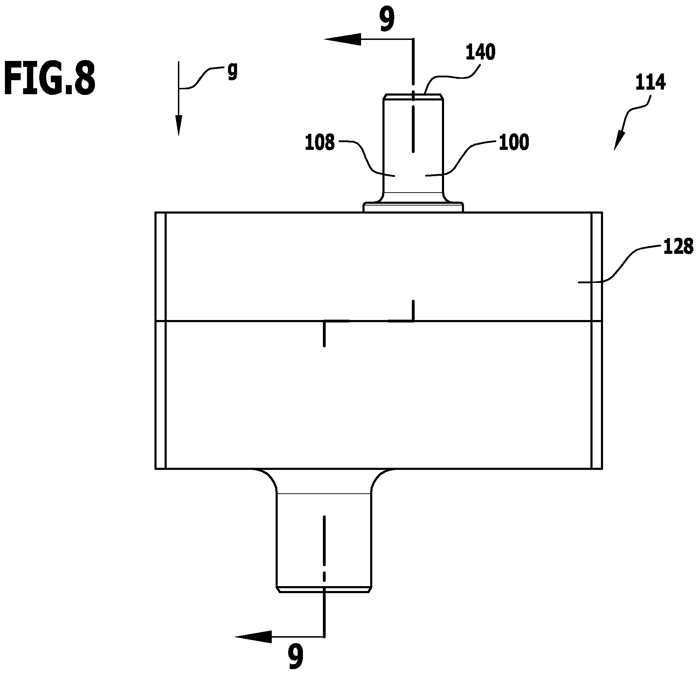

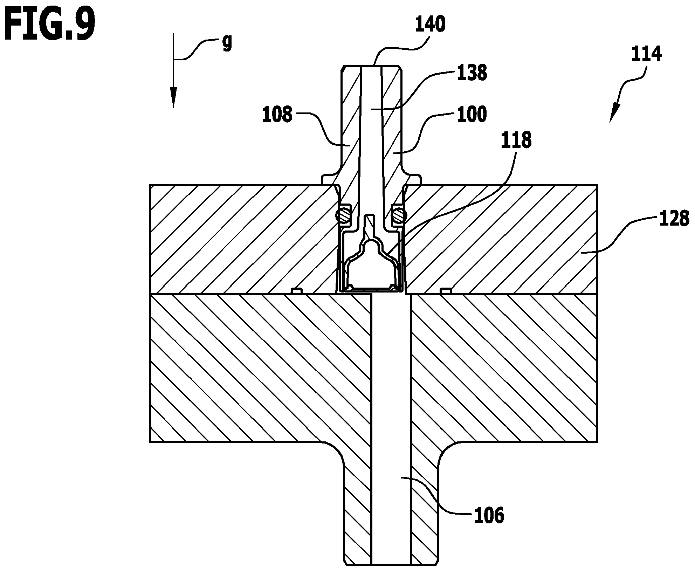

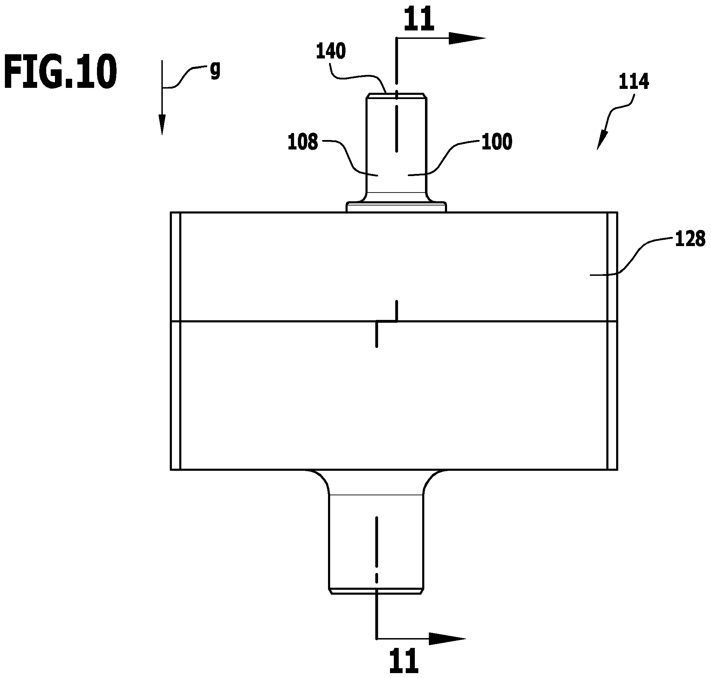

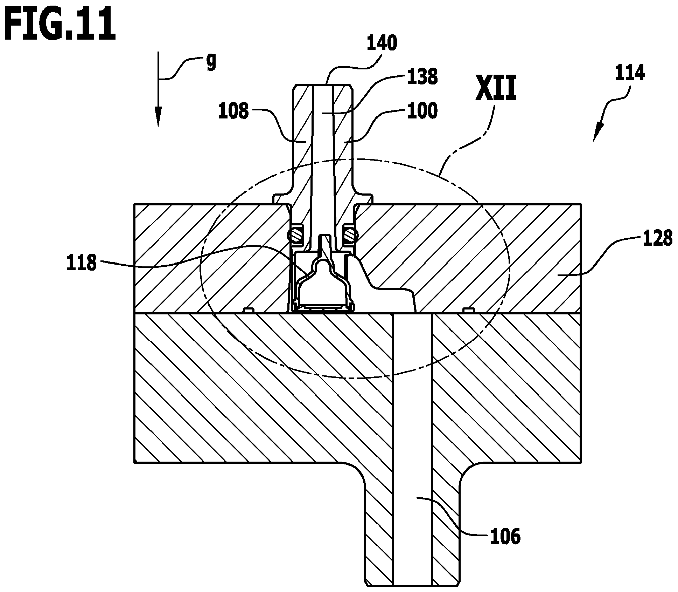

Eine in den Fig. 1 bis 12 dargestellte beispielhafte Ausführungsform einer als Ganzes mit 100 bezeichneten Drainagevorrichtung findet beispielsweise als Öldrainagevorrichtung 102 bei Ölabscheidevorrichtungen 104 von (nicht dargestellten) Verbrennungsmotoren Anwendung.

Die Drainagevorrichtung 100 dient dabei insbesondere der Rückführung von mittels der Ölabscheidevorrichtung 104 abgeschiedenem Motoröl in eine (nicht dargestellte) Ölwanne des Verbrennungsmotors.

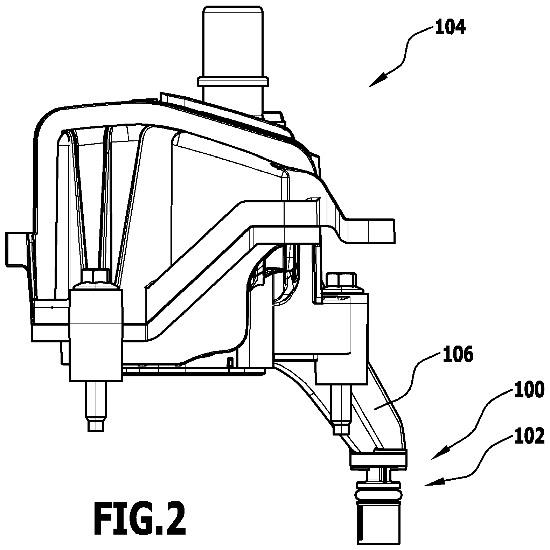

Die Drainagevorrichtung 100 ist hierzu beispielsweise an einem Drainagekanal 106 der Ölabscheidevorrichtung 104 angeordnet (siehe insbesondere die Fig. 1 und 2).

Die Drainagevorrichtung 100 umfasst einen Grundkörper 108, welcher zumindest abschnittsweise und zumindest näherungsweise hohlzylinderförmig ausgebildet ist.

Der Grundkörper 108 ist insbesondere einstückig als ein Spritzguss-Kunststoffbauteil 110 ausgebildet.

Der Grundkörper 108 bildet insbesondere ein Gehäuse 112 für ein Drainageventil 114 der Drainagevorrichtung 100.

Insbesondere umfasst der Grundkörper 108 eine Schwimmkörperaufnahme 116 zur Aufnahme eines Schwimmkörpers 118 des Drainageventils 114.

Die Schwimmkörperaufnahme 116 ist beispielsweise als ein Schwimmkörperkäfig 120 ausgebildet. Der Schwimmkörper 118 ist beispielsweise verrastend in der Schwimmkörperaufnahme 116 festlegbar oder festgelegt.

Der Grundkörper 108 umfasst ferner vorzugsweise eine Dichtelementaufnahme 122 zur Aufnahme eines Dichtelements 124, beispielsweise eines O-Rings 126.

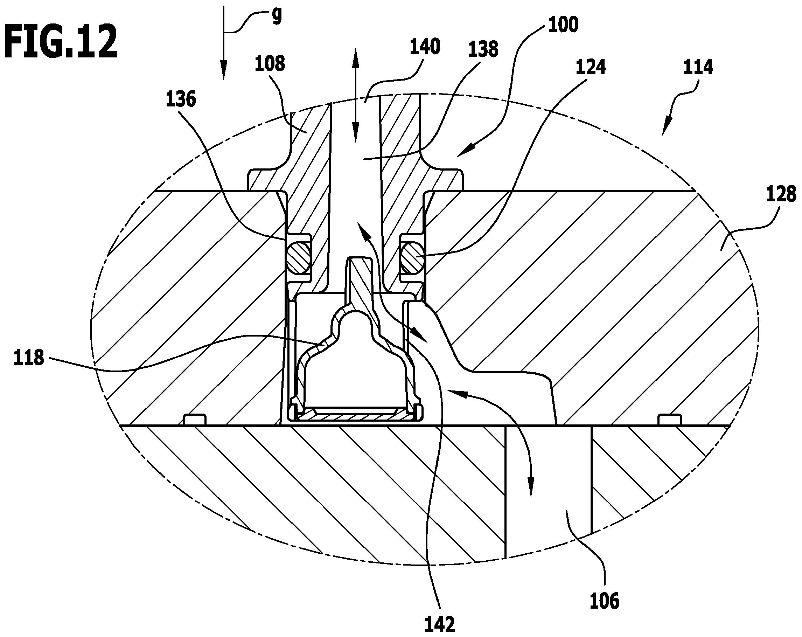

Mittels des Dichtelements 124 ist insbesondere eine äußere Abdichtung des Grundkörpers 108 zwischen dem Grundkörper 108 und einem noch zu beschreibenden Bauteil 128 realisierbar (siehe insbesondere Fig. 12).

Der Grundkörper 108 umfasst ferner vorzugsweise einen Schweißabschnitt 130.

Mittels des Schweißabschnitts 130 ist der Grundkörper 108, insbesondere die gesamte Drainagevorrichtung 100, vorzugsweise an einen Drainagekanal 106 der Ölabscheidevorrichtung 104 anschweißbar.

Der Schweißabschnitt 130 bildet somit insbesondere einen Befestigungsabschnitt 132 der Drainagevorrichtung 100 zur Befestigung derselben an der Ölabscheidevorrichtung 104.

Die Schwimmkörperaufnahme 116 und die Dichtelementaufnahme 122 samt eines daran angeordneten Dichtelements 124 bilden vorzugsweise einen Einschubabschnitt 134 der Drainagevorrichtung 100.

Der Einschubabschnitt 134 ist insbesondere ein Abschnitt der Drainagevorrichtung 100, welcher in einem montierten Zustand der Drainagevorrichtung 100 in eine Einschuböffnung 136 eines Bauteils 128 einschiebbar ist (siehe insbesondere Fig. 12).

Der Grundkörper 108 umfasst ferner eine Fluidleitung 138, welche eine Einlassöffnung 140 und eine oder mehrere Auslassöffnungen 142 umfasst.

Mittels der Fluidleitung 138 ist eine Gasströmung und/oder eine Flüssigkeit durch die Drainagevorrichtung 100 hindurchführbar.

Die Einlassöffnung 140 ist insbesondere im Wesentlichen mittig im Bereich einer zentralen Mittelachse 144 oder Symmetrieachse 146 des Grundkörpers 108 an dem Grundkörper 108 angeordnet.

Die eine oder die mehreren Auslassöffnungen 142 sind insbesondere in einer Seitenwandung 148 der Schwimmkörperaufnahme 116 der Drainagevorrichtung 100 angeordnet und/oder ausgebildet.

Insbesondere sind die eine oder die mehreren Auslassöffnungen 142 durch Ausnehmungen 150 in der Seitenwandung 148 der Schwimmkörperaufnahme 116 gebildet.

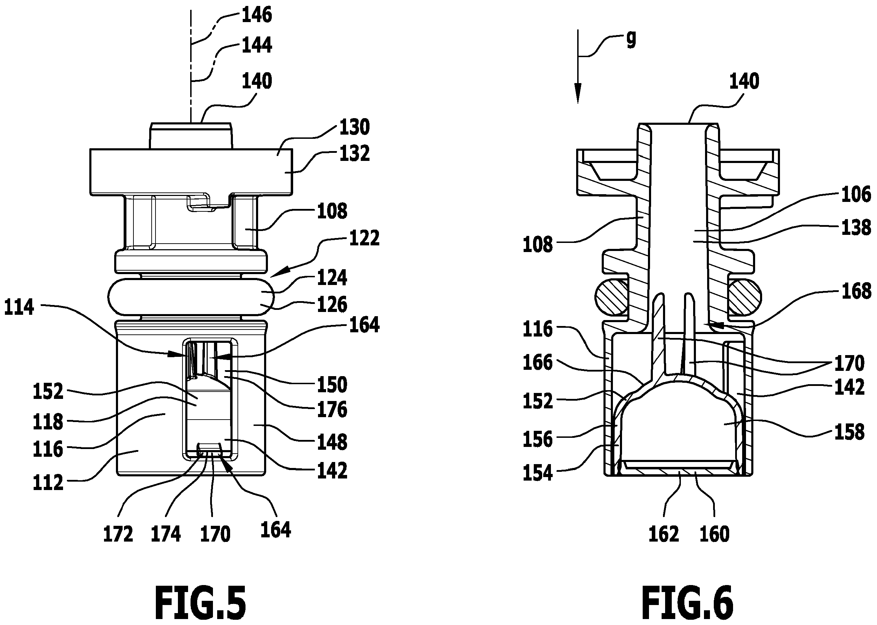

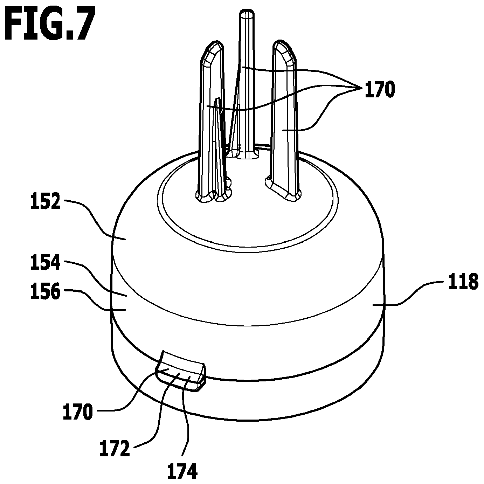

Wie insbesondere der vergrößerten Darstellung des Schwimmkörpers 118 in Fig. 7 sowie der geschnittenen Darstellung der Drainagevorrichtung 100 in Fig. 6 zu entnehmen ist, umfasst der Schwimmkörper 118 insbesondere einen Auftriebskörper 152.

Der Auftriebskörper 152 ist beispielsweise zweiteilig ausgebildet und umfasst ein Glockenelement 154 oder Topfelement 156, welches einen Innenraum 158 des Auftriebskörpers 152 im Wesentlichen fünfseitig umgibt. Eine sechste Seite des Innenraums 158 ist beispielsweise durch ein Deckelelement 160 oder Bodenelement 162 gebildet. Das Deckelelement 160 bzw. das Bodenelement 162 ist insbesondere verrastend an dem Glockenelement 154 oder dem Topfelement 156 festgelegt.

Der Innenraum 158 des Auftriebskörpers 152 ist vorzugsweise luftgefüllt. Der Auftriebskörper 152 weist somit vorzugsweise eine geringe Masse auf, so dass dieser insbesondere in einer Flüssigkeit, beispielsweise Motoröl, aufschwimmen kann.

Der Schwimmkörper 118 ist längs einer Schwerkraftrichtung g relativ zu der Schwimmkörperaufnahme 116 nach oben und nach unten bewegbar.

Ein unerwünschtes Herausfallen des Schwimmkörpers 118 aus der Schwimmkörperaufnahme 116 ist vorzugsweise mittels einer Verrastung wirksam verhindert.

Die Drainagevorrichtung 100 umfasst vorzugsweise eine Ausrichtungsvorrichtung 164, mittels welcher insbesondere eine Drehausrichtung des Schwimmkörpers 118 relativ zu der Schwimmkörperaufnahme 116 festlegbar oder festgelegt ist.

Insbesondere kann mittels der Ausrichtungsvorrichtung 164 der Schwimmkörper 118 entgegen der Schwerkraftrichtung g nach oben oder in der Schwerkraftrichtung g nach unten bewegt werden, ohne seine Drehausrichtung relativ zu der Schwimmkörperaufnahme 116 zu verändern.

Wie sich insbesondere aus Fig. 6 erschließt, kann hierdurch insbesondere gewährleistet werden, dass der Schwimmkörper 118 zuverlässig mit einem kugelabschnittsförmigen oder konischen Bereich 166 des Schwimmkörpers 118 an einen Fluiddurchlass 168 des Grundkörpers 108 der Drainagevorrichtung 100 anlegbar ist. Mittels des Schwimmkörpers 118 kann der Fluiddurchlass 168 somit zuverlässig verschlossen werden.

Die Ausrichtungsvorrichtung 164 umfasst insbesondere ein oder mehrere, beispielsweise drei, Ausrichtungselemente 170, welche stabförmig oder schwertförmig ausgebildet sind und von dem Auftriebskörper 152 des Schwimmkörpers 118 im Wesentlichen vertikal nach oben weg ragen.

Diese Ausrichtungselemente 170 sind insbesondere als Pins ausgebildet.

Vorzugsweise erstrecken sich diese Ausrichtungselemente 170 in einer in den Fig. 1 bis 12 dargestellten Offenstellung des Schwimmkörpers 118 und in einer (nicht dargestellten) Schließstellung des Schwimmkörpers 118 durch den Fluiddurchlass 168 hindurch.

Der Fluiddurchlass 168 und der oberhalb des Fluiddurchlasses 168 angeordnete Bereich der Fluidleitung 138 dienen somit als Anschlag für die Ausrichtungselemente 170, wodurch eine unerwünschte Rotation des Schwimmkörpers 118 wirksam verhindert werden kann.

Aufgrund der Ausgestaltung der Ausrichtungselemente 170 und der beabstandeten Anordnung derselben wird eine Durchströmung des Fluiddurchlasses 168 durch die Ausrichtungselemente 170 vorzugsweise nicht oder nur geringfügig beeinflusst.

Die Ausrichtungsvorrichtung 164 umfasst ferner vorzugsweise ein oder mehrere als Führungselemente 172 ausgebildete Ausrichtungselemente 170.

Diese Führungselemente 172 sind beispielsweise als Führungsvorsprünge 174 an dem Auftriebskörper 152 des Schwimmkörpers 118 ausgebildet und/oder angeordnet und ragen im Wesentlichen seitlich von dem Auftriebskörper 152 weg.

Im montierten Zustand der Drainagevorrichtung 100 erstrecken sich das eine oder die mehreren Führungselemente 172 in die eine oder die mehreren Ausnehmungen 150 in der Seitenwandung 148 der Schwimmkörperaufnahme 116.

Diese eine oder diese mehreren Ausnehmungen 150 bilden somit Ausrichtungselementaufnahmen 176 zur Aufnahme des einen oder der mehreren als Führungselemente 172 ausgebildeten Ausrichtungselemente 170.

Das eine oder die mehreren Führungselemente 172 sind dabei zusammen mit dem Schwimmkörper 118 längs oder entgegen der Schwerkraftrichtung g in der einen oder den mehreren Ausnehmungen 150 bewegbar, insbesondere während der Schwimmkörper 118 von der Offenstellung in die Schließstellung oder von der Schließstellung in die Offenstellung bewegt wird.

Wie insbesondere Fig. 12 zu entnehmen ist, ist bei der dargestellten Drainagevorrichtung 100 vorzugsweise vorgesehen, dass eine durch Pfeile in Fig. 12 angedeutete Gasströmung in der Schwerkraftrichtung g oder entgegen der Schwerkraftrichtung g durch die Drainagevorrichtung 100 hindurchführbar ist.

Der Schwimmkörper 118 wird dabei von der Gasströmung lediglich gestreift und nicht von der Gasströmung umströmt.

Insbesondere eine Durchströmung der Drainagevorrichtung 100 mit Gas entgegen der Schwerkraftrichtung g führt hierdurch vorzugsweise nicht zu einem unerwünschten Anheben des Schwimmkörpers 118 und einem hieraus resultierenden Schließen des Drainageventils 114.

Vielmehr ist im Wesentlichen unabhängig von der Durchströmungsrichtung der Drainagevorrichtung 100 und den herrschenden Druckverhältnissen zwischen der Einlassöffnung 140 und der einen oder den mehreren Auslassöffnungen 142 gewährleistet, dass der Schwimmkörper 118 in der dargestellten Offenstellung verbleibt. Lediglich bei ansteigendem Flüssigkeitspegel wird der Schwimmkörper 118 angehoben und in die Schließstellung gebracht.

Das Bauteil 128, in welches der Einschubabschnitt 134 der Drainagevorrichtung 100 einschiebbar ist, ist beispielsweise Bestandteil des Verbrennungsmotors und dient der Zuführung von abgeschiedenem Öl zu einer (nicht dargestellten) Ölwanne des Verbrennungsmotors.

Die in den Fig. 1 bis 12 dargestellte Ausführungsform der Drainagevorrichtung 100 funktioniert wie folgt:
Im montierten Zustand der Drainagevorrichtung 100 und im Betrieb derselben wird einerseits eine Gasströmung und andererseits eine Flüssigkeitsströmung durch die Drainagevorrichtung 100 hindurchgeführt.

Je nach Betriebszustand der Verbrennungsvorrichtung kann die Gasströmung in oder entgegen der Schwerkraftrichtung g durch die Drainagevorrichtung 100 hindurchgeführt werden.

Die Flüssigkeitsströmung ist jedoch stets in der Schwerkraftrichtung g nach unten gerichtet.

Insbesondere kann mittels der Drainagevorrichtung 100 somit stets Öl, welches mittels der Ölabscheidevorrichtung 104 aus der Gasströmung abgeschieden wurde, in der Schwerkraftrichtung g nach unten geführt und beispielsweise einer Ölwanne zugeführt werden.

Konstruktionsbedingt wird bei der dargestellten Drainagevorrichtung 100 gewährleistet, dass der Schwimmkörper 118 unabhängig von der auftretenden Gasströmung in der dargestellten Offenstellung verbleibt.

Lediglich dann, wenn aufgrund einer unerwünschten Fehlfunktion des Verbrennungsmotors Öl entgegen der Schwerkraftrichtung g durch den Drainagekanal 106 des Bauteils 128 nach oben gesaugt oder gedrückt wird, wird das Drainageventil 114 der Drainagevorrichtung 100 vorzugsweise geschlossen. Dies erfolgt insbesondere dadurch, dass der Schwimmkörper 118 aufgrund seiner geringeren Massendichte auf dem Öl aufschwimmt und entgegen der Schwerkraftrichtung g nach oben bewegt wird. Der Schwimmkörper 118 gelangt dabei mit dem kugelabschnittsförmigen oder konischen Bereich 166 an dem Fluiddurchlass 168 des Grundkörpers 108 zur Anlage und dichtet den Fluiddurchlass 168 ab.

Ein weiterer Rückfluss des entgegen der Schwerkraftrichtung g angesaugten oder in den Drainagekanal 106 des Bauteils 128 hineingedrückten Öls wird hierdurch wirksam gestoppt.

Sobald das Öl in dem Drainagekanal 106 des Bauteils 128 erneut absinkt, bewegt sich auch der Schwimmkörper 118 in der Schwerkraftrichtung g nach unten und gelangt erneut in die Offenstellung. Der Fluiddurchlass 168 ist dann wieder freigegeben, insbesondere um die Gasströmung durch die Drainagevorrichtung 100 zu ermöglichen.

Mittels der dargestellten Drainagevorrichtung 100 kann somit insbesondere ein zuverlässiger Betrieb der Ölabscheidevorrichtung 104 und des gesamten Verbrennungsmotors gewährleistet werden.

## Patentansprüche

1. Drainagevorrichtung (100), umfassend eine Fluidleitung (138) und ein in der Fluidleitung (138) angeordnetes Drainageventil (114),
wobei das Drainageventil (114) einen Schwimmkörper (118) umfasst, welcher einen Fluiddurchlass (168) in einer Offenstellung freigibt und in einer Schließstellung verschließt, **dadurch gekennzeichnet, dass** ein Auftriebskörper (152) des Schwimmkörpers (118) glockenförmig oder topfförmig ausgebildet ist und dass die Drainagevorrichtung (100) eine Schwimmkörperaufnahme (116) zur bewegbaren Aufnahme des Schwimmkörpers (118) umfasst, wobei eine Auslassöffnung (142) der Drainagevorrichtung (100) in einer Seitenwandung (148) der Schwimmkörperaufnahme (116) angeordnet ist und sich in der Offenstellung des Schwimmkörpers (118) zumindest abschnittsweise oberhalb des Auftriebskörpers (152) des Schwimmkörpers (118) erstreckt, so dass ein Gasstrom seitlich und/oder oberhalb des Auftriebskörpers (152) des Schwimmkörpers (118) an dem Auftriebskörper (152) des Schwimmkörpers (118) vorbeiströmen kann.

2. Drainagevorrichtung (100) nach Anspruch 1, **dadurch gekennzeichnet, dass** der Fluiddurchlass (168) an einem bezüglich der Schwerkraftrichtung (g) oberen Bereich der Schwimmkörperaufnahme (116) angeordnet ist.

3. Drainagevorrichtung (100) nach einem der Ansprüche 1 oder 2, **dadurch gekennzeichnet, dass** der Schwimmkörper (118) als ein Kunststoffbauteil, insbesondere als ein Spritzguss-Kunststoffbauteil (110), ausgebildet ist.

4. Drainagevorrichtung (100) nach einem der Ansprüche 1 bis 3, **dadurch gekennzeichnet, dass** der Schwimmkörper (118) einstückig ausgebildet ist.

5. Drainagevorrichtung (100) nach einem der Ansprüche 1 bis 3, **dadurch gekennzeichnet, dass** der Auftriebskörper (152) des Schwimmkörpers (118) zweiteilig oder mehr als zweiteilig ausgebildet ist, wobei vorzugsweise ein als Glockenelement (154) oder Topfelement (156) ausgebildetes Bauteil vorgesehen ist, welches einen seitlich und in Schwerkraftrichtung (g) nach oben hin abgedichteten Innenraum (158) des Auftriebskörpers (152) umgibt, und wobei ein als Deckelelement (160) oder Bodenelement (162) ausgebildetes Bauteil vorgesehen ist, mittels welchem der Innenraum (158) in Schwerkraftrichtung (g) nach unten hin verschlossen, insbesondere abgedichtet, ist.

6. Drainagevorrichtung (100) nach einem der Ansprüche 1 bis 5, **dadurch gekennzeichnet, dass** die Drainagevorrichtung (100) eine Ausrichtungsvorrichtung (164) umfasst, mittels welcher der Schwimmkörper (118) relativ zu der Schwimmkörperaufnahme (116) der Drainagevorrichtung (100) in eine vorgegebenen Position und/oder Drehausrichtung bringbar oder in einer vorgegebenen Position und/oder Drehausrichtung haltbar ist,
wobei die Ausrichtungsvorrichtung (164) vorzugsweise ein oder mehrere Ausrichtungselemente (170) umfasst, welche vorzugsweise an dem Auftriebskörper (152) des Schwimmkörpers (118) angeordnet sind und/oder welche vorzugsweise von dem Auftriebskörper (152) des Schwimmkörpers (118) weg ragen, wobei ein oder mehrere Ausrichtungselemente (170) vorzugsweise als Führungsvorsprünge (174) ausgebildet sind, welche mit einer oder mehreren Ausnehmungen (150) oder Vertiefungen in einer Seitenwandung (148) der Schwimmkörperaufnahme (116) in Eingriff bringbar sind,
und wobei eine oder mehrere Ausnehmungen (150) vorzugsweise in der Seitenwandung (148) der Schwimmkörperaufnahme (116) zur Aufnahme und Führung des einen oder der mehreren Führungsvorsprünge (174) vorgesehen sind, wobei die eine oder die mehreren Ausnehmungen (150) eine oder mehrere Auslassöffnungen (142) der Drainagevorrichtung (100) bilden.

7. Drainagevorrichtung (100) nach Anspruch 6, **dadurch gekennzeichnet, dass** ein oder mehrere Ausrichtungselemente (170) als vertikale Vorsprünge ausgebildet sind, welche zumindest näherungsweise entgegen der Schwerkraftrichtung (g) nach oben von dem Auftriebskörper (152) des Schwimmkörpers (118) hervorragen.

8. Drainagevorrichtung (100) nach einem der Ansprüche 6 oder 7, **dadurch gekennzeichnet, dass** ein oder mehrere Ausrichtungselemente (170)
a) als vertikale Vorsprünge ausgebildet sind, welche sich in der Schließstellung des Schwimmkörpers (118) und/oder in der Offenstellung des Schwimmkörpers (118) durch den Fluiddurchlass (168) der Drainagevorrichtung (100) hindurcherstrecken; und/oder
b) im Wesentlichen stabförmig oder schwertförmig ausgebildet sind; und/oder
c) einen im Wesentlichen sternförmigen oder kreuzförmigen horizontalen Querschnitt aufweisen.

9. Drainagevorrichtung (100) nach einem der Ansprüche 1 bis 8, **dadurch gekennzeichnet, dass** die Drainagevorrichtung (100) einen Grundkörper (108) umfasst, welcher die Fluidleitung (138), eine Schwimmkörperaufnahme (116), eine Dichtelementaufnahme (122), einen Einschubabschnitt (134) und/oder einen Befestigungsabschnitt (132) umfasst.

10. Drainagevorrichtung (100) nach Anspruch 9, **dadurch gekennzeichnet, dass** der Grundkörper (108) als ein Kunststoffbauteil, insbesondere als ein Spritzguss-Kunststoffbauteil (110), ausgebildet ist.

11. Drainagevorrichtung (100) nach einem der Ansprüche 9 oder 10, **dadurch gekennzeichnet, dass** der Grundkörper (108) einstückig ausgebildet ist.

12. Drainagevorrichtung (100) nach einem der Ansprüche 1 bis 11, **dadurch gekennzeichnet, dass** die Drainagevorrichtung (100) eine Öldrainagevorrichtung (102) ist, insbesondere für einen Verbrennungsmotor eines Kraftfahrzeugs.

## Claims

1. Drainage device (100), comprising a fluid line (138) and a drainage valve (114) arranged in the fluid line (138),
wherein the drainage valve (114) comprises a floating body (118), which opens a fluid passage (168) in an open position and closes the same in a closed position, **characterised in that** a buoyancy body (152) of the floating body (118) is bell-shaped or pot-shaped and **in that** the drainage device (100) comprises a floating body receptacle (116) for movably receiving the floating body (118), wherein an outlet opening (142) of the drainage device (100) is arranged in a sidewall (148) of the floating body receptacle (116) and extends in the open position of the floating body (118) at least in part above the buoyancy body (152) of the floating body (118), such that a gas flow can flow past the buoyancy body (152) of the floating body (118) laterally and/or above the buoyancy body (152) of the floating body (118).

2. Drainage device (100) according to claim 1, **characterised in that** the fluid passage (168) is arranged at an upper region of the floating body receptacle (116) with reference to the direction of gravity (g).

3. Drainage device (100) according to either one of claims 1 or 2, **characterised in that** the floating body (118) is formed as a plastics component, in particular as an injection-moulded plastics component (110).

4. Drainage device (100) according to any one of claims 1 to 3, **characterised in that** the floating body (118) is formed in one piece.

5. Drainage device (100) according to any one of claims 1 to 3, **characterised in that** a buoyancy body (152) of the floating body (118) is formed in two parts or more than two parts, wherein a component formed as a bell element (154) or pot element (156) is preferably provided, which component surrounds an interior (158) of the buoyancy body (152) sealed off laterally and upwardly in the direction of the force of gravity (g), and wherein a component formed as a cover element (160) or base element (162) is provided, by means of which the interior (158) is closed, in particular sealed, downwardly in the direction of the force of gravity (g).

6. Drainage device (100) according to any one of claims 1 to 5, **characterised in that** the drainage device (100) comprises an alignment device (164), by means of which the floating body (118) is configured to be brought into a predefined position and/or rotational alignment or to be held in a predefined position and/or rotational alignment relative to a floating body receptacle (116) of the drainage device (100),
wherein the alignment device (164) preferably comprises one or more alignment elements (170), which preferably are arranged on the buoyancy body (152) of the floating body (118) and/or which preferably protrude away from the buoyancy body (152) of the floating body (118), wherein one or more alignment elements (170) are formed preferably as guide protrusions (174), which are configured to be brought into engagement with one or more cut-outs (150) or recesses in a side wall (148) of the floating body receptacle (116),
and wherein one or more cut-outs (150) are provided preferably in the side wall (148) of the floating body receptacle (116) for receiving and guiding the one or more guide protrusions (174), wherein the one or more cut-outs (150) form one or more outlet openings (142) of the drainage device (100).

7. Drainage device (100) according to claim 6, **characterised in that** one or more alignment elements (170) are formed as vertical protrusions which protrude upwardly from the buoyancy body (152) of the floating body (118) at least approximately opposite to the direction of the force of gravity (g).

8. Drainage device (100) according to either one of claims 6 or 7, **characterised in that** one or more alignment elements (170)
a) are formed as vertical protrusions, which extend through the fluid passage (168) of the drainage device (100) in the closed position of the floating body (118) and/or in the open position of the floating body (118); and/or
b) are formed substantially in a rod-shaped or sword-shaped manner; and/or
c) have a substantially star-shaped or cross-shaped horizontal cross section.

9. Drainage device (100) according to any one of claims 1 to 8, **characterised in that** the drainage device (100) comprises a main body (108), which comprises the fluid line (138), a floating body receptacle (116), a sealing element receptacle (122), an insertion portion (134) and/or a fastening portion (132).

10. Drainage device (100) according to claim 9, **characterised in that** the main body (108) is formed as a plastics component, in particular as an injection-moulded plastics component (110).

11. Drainage device (100) according to either one of claims 9 or 10, **characterised in that** the main body (108) is formed in one piece.

12. Drainage device (100) according to any one of claims 1 to 11, **characterised in that** the drainage device (100) is an oil drainage device (102), in particular for an internal combustion engine of a motor vehicle.

## Revendications

1. Dispositif de vidange (100), comprenant un conduit de fluide (138) et une soupape de vidange (114) disposée dans le conduit de fluide (138), dans lequel la soupape de vidange (114) comprend un corps flottant (118), lequel dégage un passage de fluide (168) dans une position ouverte et le ferme dans une position fermée, **caractérisé en ce qu'**un corps de poussée verticale (152) du corps flottant (118) est réalisé en forme de cloche ou en forme de pot, et que le dispositif de vidange (100) comprend un logement de corps flottant (116) pour loger de manière mobile le corps flottant (118), dans lequel une ouverture de sortie (142) du dispositif de vidange (100) est disposée dans une paroi latérale (148) du logement de corps flottant (116) et s'étend, dans la position ouverte du corps flottant (118), au moins par endroits au-dessus du corps de poussée verticale (152) du corps flottant (118) de sorte qu'un flux de gaz peut circuler le long du corps de poussée verticale (152) du corps flottant (118) latéralement et/ou au-dessus du corps de poussée verticale (152) du corps flottant (118).

2. Dispositif de vidange (100) selon la revendication 1, **caractérisé en ce que** le passage de fluide (168) est disposé sur une zone supérieure, par rapport au sens de la force de gravité (g), du logement de corps flottant (116).

3. Dispositif de vidange (100) selon l'une quelconque des revendications 1 ou 2, **caractérisé en ce que** le corps flottant (118) est réalisé en tant qu'un composant en matière plastique, en particulier en tant qu'un composant en matière plastique moulé par injection (110).

4. Dispositif de vidange (100) selon l'une quelconque des revendications 1 à 3, **caractérisé en ce que** le corps flottant (118) est réalisé d'un seul tenant.

5. Dispositif de vidange (100) selon l'une quelconque des revendications 1 à 3, **caractérisé en ce que** le corps de poussée verticale (152) du corps flottant (118) est réalisé en deux parties ou avec plus de deux parties, dans lequel de préférence est prévu un composant réalisé en tant qu'élément formant cloche (154) ou élément formant pot (156), lequel entoure un espace intérieur (158), étanchéifié latéralement et vers le haut dans le sens de la force de gravité (g), du corps de poussée verticale (152), et dans lequel est prévu un composant réalisé en tant qu'élément formant couvercle (160) ou élément formant fond (162), au moyen duquel l'espace intérieur (158) est fermé, en particulier étanchéifié, vers le bas dans le sens de la force de gravité (g).

6. Dispositif de vidange (100) selon l'une quelconque des revendications 1 à 5, **caractérisé en ce que** le dispositif de vidange (100) comprend un dispositif d'orientation (164), au moyen duquel le corps flottant (118) peut être amené dans une position et/ou orientation par rotation prédéfinie ou peut être maintenu dans une position et/ou orientation par rotation prédéfinie par rapport au logement de corps flottant (116) du dispositif de vidange (100),
dans lequel le dispositif d'orientation (164) comprend de préférence un ou plusieurs éléments d'orientation (170), lesquels sont disposés de préférence sur le corps de poussée verticale (152) du corps flottant (118) et/ou lesquels dépassent de préférence tout en s'éloignant du corps de poussée verticale (152) du corps flottant (118), dans lequel un ou plusieurs éléments d'orientation (170) sont réalisés de préférence en tant que parties faisant saillie de guidage (174), lesquelles peuvent être amenées en prise avec un ou plusieurs évidements (150) ou renfoncements dans une paroi latérale (148) du logement de corps flottant (116),
et dans lequel un ou plusieurs évidements (150) sont prévus de préférence dans la paroi latérale (148) du logement de corps flottant (116) pour loger et guider l'une ou les plusieurs parties faisant saillie de guidage (174), dans lequel un ou les plusieurs évidements (150) forment une ou plusieurs ouvertures de sortie (142) du dispositif de vidange (100).

7. Dispositif de vidange (100) selon la revendication 6, **caractérisé en ce qu'**un ou plusieurs éléments d'orientation (170) sont réalisés en tant que parties faisant saillie verticales, lesquelles dépassent au moins approximativement à l'opposé du sens de la force de gravité (g) vers le haut du corps de poussée verticale (152) du corps flottant (118).

8. Dispositif de vidange (100) selon l'une quelconque des revendications 6 ou 7, **caractérisé en ce qu'**un ou plusieurs éléments d'orientation (170)
a) sont réalisés en tant que parties faisant saillie verticales, lesquelles s'étendent à travers le passage de fluide (168) du dispositif de vidange (100) de part en part dans la position fermée du corps flottant (118) et/ou dans la position ouverture du corps flottant (118) ; et/ou
b) sont réalisés sensiblement en forme de barre ou en forme d'épée ; et/ou
c) présentent une section transversale horizontale sensiblement en forme d'étoile ou en forme de croix.

9. Dispositif de vidange (100) selon l'une quelconque des revendications 1 à 8, **caractérisé en ce que** le dispositif de vidange (100) comprend un corps de base (108), lequel comprend le conduit de fluide (138), un logement de corps flottant (116), un logement d'élément d'étanchéité (122), une section d'enfilement (134) et/ou une section de fixation (132).

10. Dispositif de vidange (100) selon la revendication 9, **caractérisé en ce que** le corps de base (108) est réalisé en tant qu'un composant en matière plastique, en particulier un composant en matière plastique moulé par injection (110).

11. Dispositif de vidange (100) selon l'une quelconque des revendications 9 ou 10, **caractérisé en ce que** le corps de base (108) est réalisé d'un seul tenant.

12. Dispositif de vidange (100) selon l'une quelconque des revendications 1 à 11, **caractérisé en ce que** le dispositif de vidange (100) est un dispositif de vidange d'huile (102), en particulier pour un moteur à combustion interne d'un véhicule à moteur.
